# EUROPEAN PATENT SPECIFICATION

(11) **EP 0 587 980 B1**
(45) Date of publication and mention of the grant of the patent: **21.06.2000**
(21) Application number: 93105567.7
(22) Date of filing: 03.04.1993
(51) Int. Cl.: H04L 12/56, H04Q 7/20

(54) **Improvements in or relating to cellular mobile radio systems**
Zellulares Mobilfunksystem
Système de radio mobile cellulaire

(30) Priority: 18.09.1992 GB 9219824
(43) Date of publication of application: 23.03.1994
(73) Proprietor: ROKE MANOR RESEARCH LIMITED, Romsey, Hampshire, SO51 0ZN (GB)
(72) Inventor: DeVile, Jonathan Mark, Bournemouth, Dorset BH1 4DR (GB)
(74) Representative: Allen, Derek

(56) References cited:
- CA-A- 2 060 428
- IEEE TRANSACTIONS ON VEHICULAR TECHNOLOGY, vol.39, no.4, November 1990, USA pages 340 - 351 N.M. MITROU ET AL 'A RESERVATION MULTIPLE ACCESS PROTOCOL FOR MICROCELLULAR MOBILE-COMMUNICATION SYSTEMS'
- ELECTRONICS AND COMMUNICATIONS IN JAPAN, vol.66, no.4, April 1983, NEW YORK US pages 75 - 84 K. ONO ET AL. 'Priority Based Packet Reservation Demand Asignment TDMA System'
- GLOBECOM '91, vol.3, December 1991, NEW YORK, US pages 1964 - 1968 K.S. MEIER-HELLSTERN ET AL. 'A WIRELESS SERVICE FOR THE 802.6 METROPOLITAN AREA NETWORK'
- 39TH INTERNATIONAL VEHICULAR TECHNOLOGY CONFERENCE, vol.1, May 1989, USA pages 285 - 291 A. EIZENHÖFER '.BCMA : Backlog Controlled Multiple Access'

## Description

This invention relates to cellular mobile radio systems which include a packet reservation, multiple access (PRMA) protocol, and more especially it relates to the provision of a variable bit rate service for such systems.

It is envisaged that the provision of a variable bit rate service whereby a portion of the available channel capacity may be reserved on demand by a mobile user to permit the transmission of additional data, as may for example be required in a video link, will become increasingly important.

Systems in which user mobiles contend for access in the same time slot in which they transmit information are known and one such system is described in an article entitled 'Performance of PRMA: A packet voice protocol for cellular systems', which was published in IEEE Transactions on Vehicular Technology, vol.40 No. 3, August 1991, hereinafter referred to as Ref. 1. Such systems have the disadvantage that each mobile contends blindly for required access and therefore undue delays may occur in the presence of contention for the same time slot by two or more mobiles and quite obviously if a mobile requires a number of time slots there is a probability of even greater delays especially since each slot must be individually contended for.

In an alternative system as described in an article entitled 'A reservation multiple access protocol for microcellular mobile communication systems', which was published in IEEE Transactions on Vehicle Technology, volume 39, No. 4, November 1990, referred to as Ref. 2, contention/access data and information data are transmitted in separate time slots and moreover the arrangement is such that the base station can have a frill knowledge of slot availability, which system is hereinafter referred to as a PRMA system of the kind specified.

In order efficiently to provide for variable bit rate transmission a user mobile must be able to reserve a plurality of slots in a given time frame. With known and presently proposed systems, this facility is not catered for.

CA-A-2 060 428 discloses method of reserving time slots for transmission in which a mobile terminal is transmitting to a base station. The base station transmits a control message which indicates that a time slot is free. A mobile terminal that wishes to reserve that time slot sends a message to the base station. If more than one mobile terminal wishes to reserve that time slot, the mobile station with the strongest signal strength is able to reserves that time slot. Once reserved by a particular mobile terminal, the mobile terminal is then able to send a control message in that time slot. If more than one slot is required, the mobile terminal also sends a demand with its control message indicating that the same time slot in the next frame should be reserved. The base station reserves the same time slot in the next frame. This is repeated according to the number of time slots the mobile terminal requires.

39^{th} International Vehicular Technology Conference, Vol. 1, May 1989, USA, pages 285 to 291, *"BCMA: Backlog Controlled Multiple Access"* discloses backlog controlled multiple access wherein a request can be made for one or more reserved time slots.

It is an object of the present invention to provide a system wherein the reservation of a plurality of slots in a given time frame is facilitated.

According to one aspect of the present invention, there is provided a method of operating a cellular mobile radio system comprising a base station and a plurality of mobile terminals in accordance with a packet reservation multiple access protocol, data being transmitted between the base station and the mobile terminals in transmission links comprising a plurality of frames, the method comprising the steps of:- a) designating a plurality of time slots for each frame for the transmission of data between the mobile terminals and the base station; b) transmitting access contention data from a mobile terminal to the base station; and c) transmitting data from the mobile terminal to the base station in the time slots; characterised in that step b) comprises accumulating data for transmission, determining the number of time slots required per frame for transmitting the accumulated data between the mobile terminal and the base station as the data is being accumulated, and incorporating that number of time slots in the access contention data, the access contention data being transmitted in a designated time slot; and in that the method further comprises, prior to step c), the step of allocating time slots to the mobile terminal in accordance with availability, the time slots in a frame being allocated in accordance with the number of time slots included in the access contention data.

According to another aspect of the present invention, there is provided a cellular mobile radio system comprising a base station and a plurality of mobile terminals in which data is transmitted between the base station and the mobile terminals in transmission links comprising a plurality of frames, the system comprising:- means for designating a plurality of time slots for each frame; means for transmitting access contention data; and means for transmitting data in the time slots; characterised in that the system further comprises means for accumulating data for transmission, means for determining the number of time slots required per frame as the data is being accumulated, and means for including the number of time slots in the access contention data; and means for allocating a plurality of time slots in a frame in accordance with the accumulated data.

The packet reservation multiple access protocol may be a PRMA system of the kind specified.

Since in this system the base station has a comprehensive knowledge of the current availability of information carrying slots, available slots can be allocated on the "down link" (base to mobile) in response to slot requests in the field reserved for such requests, which requests are transmitted by the mobile unit on the "up link" (mobile to base).

As will be readily appreciated by the cognoscenti, since only one access contention request is required irrespective of the number of information slots required, the access contention time required to reserve capacity will be minimised or at least substantially reduced as compared with a system in which each individual slot must be contended for.

One embodiment of the invention will now be described by way of example only with reference to the accompanying drawings, in which;
Figure 1 is a diagram showing a PRMA protocol as used in Ref.1., as hereinbefore referred to;
Figure 2 is a diagram showing a PRMA protocol as used in Ref.2, as hereinbefore referred to;
Figure 3 is a diagram showing an information field;
Figure 4 is a diagram of a PRMA protocol for use in the present invention; and,
Figure 5 is a somewhat schematic block diagram of a mobile unit and base station in accordance with one embodiment of the present invention.

Considering firstly known systems for multiplexing multiple voice users, packet reservation multiple access (PRMA) is a multiple access protocol which first appeared in Ref.1, as hereinbefore referred to. PRMA is a technique used for multiplexing packetised digital speech or data onto a time divided carrier. It is concerned with the situation in mobile cellular radio systems in which mobile stations communicate with a base station in a given cell. In this situation mobile stations cannot hear each other but they can hear the base station. Communication from mobile to base station is known as up-link communication whereas communication from base station to mobile is known as down-link communication.

Time division multiple access schemes may either be time division duplex or frequency division duplex. In a time division duplex scheme up and down link transmission is facilitated on the same carrier frequency by dividing the carrier by time with, for example, mobiles transmitting in a first half of the up-link frame and a base station transmitting in a second half frame on the down-link. With a frequency division multiplex scheme, the up-link and down-link are on different frequencies. A PRMA multiple access scheme will function on both frequency division duplex and time division duplex, although the following examples employ the use of a frequency division duplex scheme by way of illustration. In either case the carrier is divided into identical size frames the make-up of which is determined by the PRMA protocol in accordance with known specified parameters.

The PRMA protocol was developed so as to take advantage of the discontinuous nature of transmission of voice so as to support more voice users than there are voice channels on the time divided carrier. As such, a mobile station only accesses a voice channel whenever a period of speech or talk spurt is produced. Whenever the talk spurt is finished, the mobile releases the channel and hence inactive mobiles do not occupy capacity unnecessarily. Hence a PRMA scheme is able to improve the capacity utilisation by statistically multiplexing the voice users in a cell onto the time divided carrier.

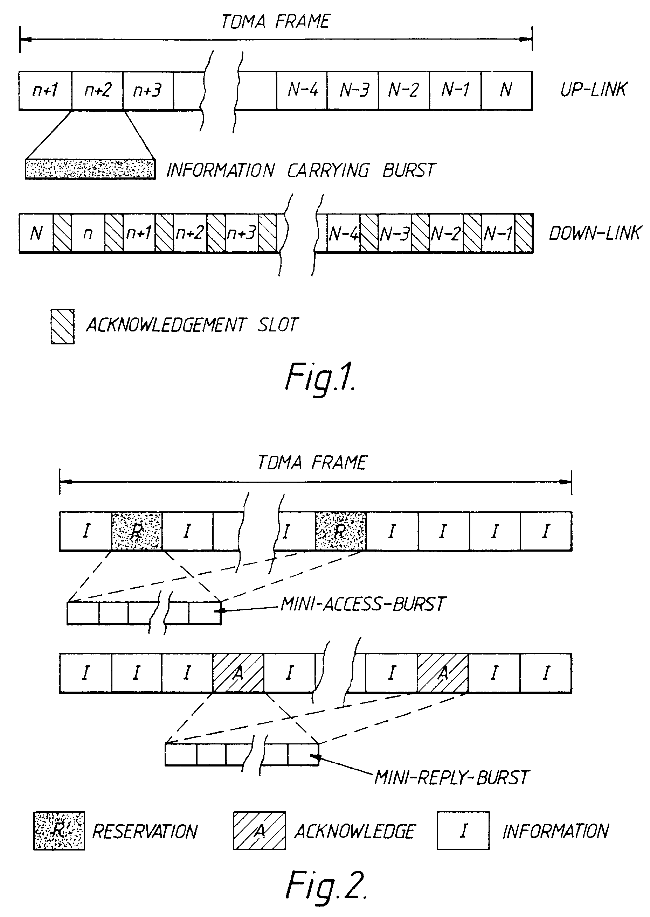

There are principally two variants of the PRMA protocol. Both variants are described in published literature as multiple access protocols for short range communications in micro cells for example. The first variant to appear in published literature is Ref.1, as hereinbefore referred to. The operation of the protocol described in Ref.1 is herein illustrated in Figure 1 and might be described as follows. The up-link time frame is divided into a number of slots for carrying speech packets such that for an active voice one packet is required to be transmitted per frame. The down-link is divided into corresponding time slots but in addition it also has acknowledgement slots for each pair of time slots on the up and down-link frames. Whenever a talk spurt starts from a particular mobile the mobile contends for access to the channel by broadcasting an access contention burst that contains its address in any time slot in the frame. If this burst of data is received successfully by a base station then the base station re-broadcasts that mobile's address on the down-link in the corresponding acknowledgement slot. This slot is hence reserved for the mobile to broadcast until such time as the talk spurt ends in which case the slot is released and available for another mobile to access. The mobile signifies that the slot has been released in one of two ways. It either leaves the time slot empty, which is recognised by the base station as a sign that the mobile has finished with it, or it broadcasts a special end of message burst, which has the same effect.

If two or more mobiles attempt to gain access to the channel by broadcasting in the same slot the base station detects this and broadcasts a null message in the corresponding acknowledgement slot. The mobile then backs off for a random time and re-broadcasts in another slot at random.

A key point with this PRMA variant is that the mobiles contend for access in the same time slots in which they will transmit information. Secondly, as with the protocol described in Ref.2, as hereinbefore referred to, the critical process causing delay is in gaining access to the channel through the access contention broadcast collision detection by the base station and hence re-broadcast by the mobile.

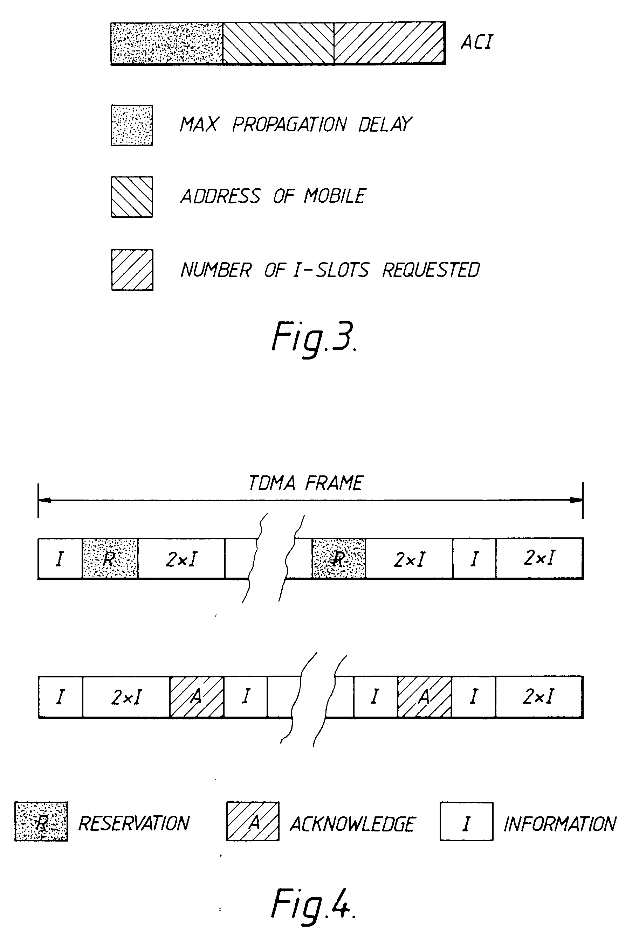

Considering now the protocol described in Ref.2, as hereinbefore referred to, this differs fundamentally from the protocol of Ref.1 because the access contention burst is broadcast in a separate time slot to that in which the information is broadcast. The essence of the protocol described in Ref.2 will now be considered with reference to the diagram as shown in Figure 2. On the up-link, two types of slots exist. There are I-slots which are used only for the transmission of information carrying bursts and R-slots where only access contention bursts are transmitted. The reservation access burst consists of the address of the mobile which is making the access contention. The mobile gains access to the channel by transmitting its access contention burst in one of the several mini slots that make up an R-slot, in one of the R slots on the up-link frame. The down-link is made up of I-slots as well as A slots. When the mobile contends for access on the up-link by transmitting its access contention, the base station replies to this on the down-link, by transmitting the I-slot number on which it should transmit its data carrying burst. The A slots follow the R-slots in time. The essence of the protocol as described in Ref.2 is that the mobile transmits its address on the up-link in one of the mini slots that make up an R-slot in one of the R-slots. On the next A slot in the corresponding mini slot the base station broadcasts one of three types of acknowledgement packet. If the access contention request was correctly received, and an I-slot is available for transmission of an information carrier burst, then the base station sends the mobile address, together with the I-slot number on which the information is to be sent.

If the mobile's address was received correctly, but at that moment, no I-slot was available the mobile's address is transmitted on the down-link, together with an indication to wait for an information slot to come free.

If two or more mobiles broadcast their access contention bursts in the same mini slot and therefore collide, or if no air-interface channel identifier burst were broadcast on the up-link, then the base station broadcasts an idle burst.

Mobiles whose initial access is blocked by collision, back off and re-try for access contention in R-slots at random with a given probability.

It is apparent that with a PRMA scheme, in order to support variable bit rates, a user must have the ability to reserve multiple slots in any given time frame. In known systems and for example in a system using the PRMA protocol in accordance with Ref.1, a data source requiring three slots in the sub frame would require three access contentions. This would therefore increase the number of opportunities for collision and hence re-transmission and hence result in a greatly increased delay.

Similarly, if a protocol as described in Ref.2 were employed this would also require three access contentions for a user requiring three slots in a frame. If however an extra field is appended to the access contention burst, in which field the number of slots required is specified together with the mobile address, then it is possible to request from the base station directly the number of slots that are required by the mobile instantaneously. Since the base station has complete knowledge of the current availability of the information carrying slots it can allocate the mobile the available slots by signalling the mobile on the down-link. Most importantly this requires only one access contention which will therefore reduce the access contention time required to reserve the capacity required. This adapted access contention burst will hereinafter be referred to as an Air-Interface Channel Identifier (ACI). As shown in Figure 3 a typical ACI field includes data requesting a specified number of information slots, data appertaining to the address of the mobile unit and optionally a training sequence as would be required for equalization purposes in a mobile radio channel.

Since the instantaneous capacity requirements of a data source are gained through the ACI, it can be seen that an effective channel can be set up and established through the ACI only. Thus in this way there is no need to differentiate between signalling and data traffic, with both being multiplexed on to the TDMA frame. However a mobile accessing the channel for signalling information may increase the access contention priority by using a higher re-transmission probability. Hence for example asynchronous transfer mode (ATM) may be supported over the air-interface by simply mapping a VCI/VPI pair of the air-interface on to the ACI of the access protocol.

An additional problem in a large cell is the propagation delay experienced by mobiles accessing the channel. When addressing information and any additional fields of data are added, together with redundancy required for collision detection, the ACI burst will be of a similar size to the information carrying bursts. Thus the reservation capacity slot or R-slots will need to be of similar size to the information slots and then only one ACI will fit into a given R-slot. However, considering now the effect of propagation delay on the mobile broadcasting data on the channel, the first access that a mobile will make to the channel at any point in communicating with the base station will be through the access contention burst. This being so, it is unlikely that the mobile will be in the same position it was after the last talk-spurt or call. As such the ACI burst broadcast in the R-slots will be made without any timing adjustment, and therefore must include the round-trip delay propagation time. If the PRMA Ref.1 protocol were employed, then this additional propagation time would have to be made in all slots, since access contention and information broadcast are made in the same slots. However since VBR-PRMA i.e (variable bit rate) - PRMA access contention and information transfer is made in separate slots, only the R-slots need include this uncertain round-trip propagation time. Following the first access, the base station is able to measure the propagation time and signal the mobile station to advance its transmission timing so as to fit its information burst into the information slot. Thus the VBR-PRMA protocol is able to recover the capacity that would have effectively been lost with the PRMA Ref.1 protocol, since the propagation delay would be required in each time slot.

As can be seen from the diagram in Figure 4, in addition to the single I-slots, there also appear the 2 x I or double I-slots. These are required to carry speech data and information respectively. The incorporation of two possible slot sizes into the carrier sub-frame is required because of the delay constraints imposed on the transmission of voice traffic. In order to support more voice users on the air-interface, voice traffic is trans-coded to a lower bit rate. If a large burst is used to transmit data, a more efficient transport of digital information over the air-interface will result, because the non-information carrying overheads associated with transmitting each burst are of a fixed size. However for a large burst the delay incurred in waiting for enough information from a voice code would be so large as to make this delay intolerable. Hence a small burst size is required for voice traffic, at the expense of efficiency. The constraint of delay does not exist for the transport of data, in which case a larger burst size is employed so as to improve the efficiency of transport. Both single I-slots and Double I-slots are set up and positioned dynamically by the base station according to the traffic load requirements.

Automatic Repeat Request (ARQ) is a well known technique which is used to improve the error rate of a digital communications link at the expense of delay. A basic form of the technique is that an information burst having been transferred over the air-interface has some mechanism to test whether the burst has been received correctly, or has achieved a given probability of error. If the burst fails this test, then a repeat request is made and the burst is re-transmitted. There are various variants and hybrids to the basic ARQ technique.

In a VBR-PRMA scheme as herein proposed, it can be observed that in terms of the efficiency of information broadcast to the channel for signalling and control for contending for access and reserving capacity on the channel, the system will achieve greater efficiency when the channel capacity reservation is longer rather than for a shorter period. With the VBR-PRMA scheme it is proposed to support signalling and data transmission on the same channel. So as to achieve good efficiency for gaining access to the channel mentioned above, the basic packets of information on which ARQ is made are grouped into batches and transmitted over the air-interface. Any packets required for repeat request are then identified and their re-transmission requests made for the entire batch by accessing the Down-link channel. Since this requires only a single access contention per batch of bursts, as opposed to an access contention per burst, a much greater efficiency in the transport of signalling information on the air-interface will result, at the expense of some increase in delay.

To facilitate operation in a moble radio system, a protocol as shown in Figure 4, may be provided which requires the following features:

The R-slot size on which the mobile's ACI bursts are broadcast, now have a time occupancy that is of a similar size or larger than the basic I-slot. This is mainly to include a detection/correction scheme, to ensure that the ACI has a good probability of reception in a hostile radio channel, and to identify very accurately when it is received incorrectly. It also contains the information fields as shown in Fig.3.

There are no mini-bursts broadcast in the R- and A-slots, and as indicated below, the R- and A-slots are only large enough to hold a single ACI burst as this will be broadcast without adaptive burst alighment, and so includes the maximum propagation delay.

Additionally, to support asynchronous transfer mode (ATM) operation, the following features are important.

The VPI/VCI, ie virtual path identifier/virtual channel identifier, pair of the ATM-cell is mapped on to the ACI identifier field. This therefore allows the support of signalling as well as data on the air-interface. The ACI burst therefore has a field identifying the VPI/VCI pair, and a field identifying the number of slots it requires. The second field allows the information transfer rate to be dynamically varied.

Signalling ACI's are given a higher probability of re-transmission, thus allowing them to gain access to the channel more quickly, with higher priority.

Since the protocol is to be employed in cells where the propagation delay is significant, adaptive burst alignment is employed for the transmission of data carrying bursts. As the ACI will be without adaptive burst alignment, the R slot will be large enough to incorporate the maximum propagation time envisaged for the longest range of operation. Hence by measuring the round-trip propagation delay on the ACI burst, the base station informs the mobile of this value and so adjusts it broadcast timing accordingly.

To allow low data rate, delay critical information to be carried over the air-interface a shorter information carrying burst will be used, that is broadcast in a single I-slot. To improve the data transmission efficiency, the data from the ATM-cell payload will be transmitted using a double I-slot. Hence the up and down-link frames will be made up of single and double I-slots.

To offer higher data integrity an ARQ scheme may be employed. To improve the efficiency of the ratio of information transmitted on the channel to the access contention traffic, ATM-cells are broadcast in batches. For each batch, cells received incorrectly are NACK'd, whilst if a batch is received correctly then only this is ACK'd. The ACK and NACK bursts will be transmitted in the carrier frame I-slots, with channel access being performed through the ACI associated with signalling. Hence one access contention per batch as opposed to one per cell is used and therefore an improvement in efficiency is achieved.

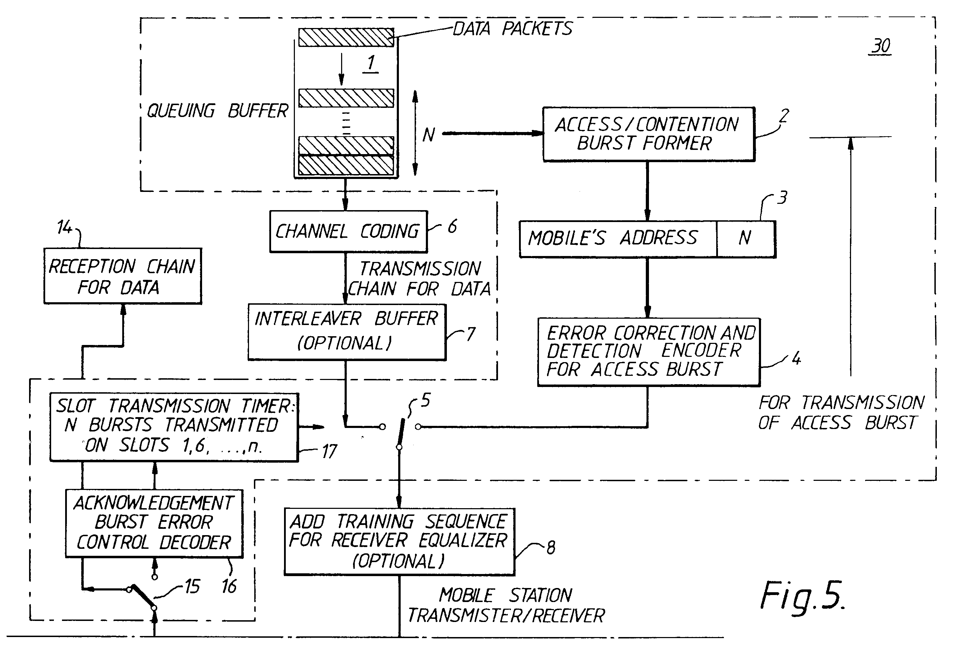

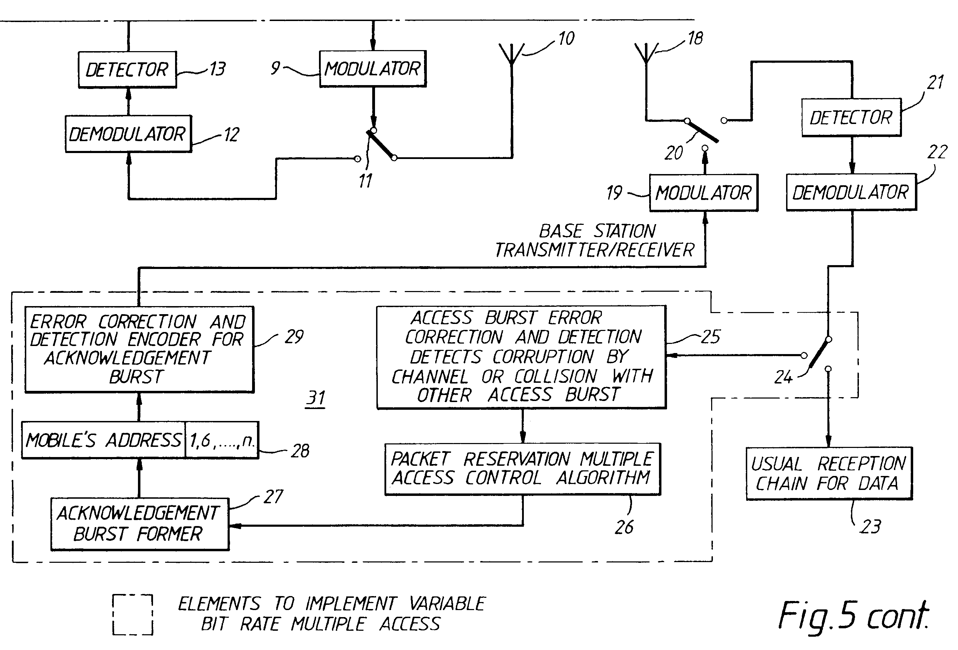

Referring now to Fig.5, one arrangement of mobile and base station for putting the invention into effect will now be described.

Referring firstly to the mobile station the transmitter comprises a queuing buffer store 1 in which data for transmission is accumulated. The contents of the buffer is sensed by an access contention burst former 2 which determines the number of packets of data to be transmitted in a TDMA frame. Data appertaining to this number, together with the address of the mobile is fed via an address module 3 to an error correction and detection encoder 4 to a switch 5. The switch 5 is also fed from the queuing buffer 1 via a channel coding unit 6 and an interleaver buffer 7. The switch is arranged to feed an equaliser 8 and a modulator 9 which in turn feeds an aerial 10 via a transmit/receive switch11. It will be appreciated that the switch 5 is operated so that the interleaver buffer 7 is connected to the equaliser 8 for the transmission of data during an appropriate time slot or so that the error correction and detection decoder 4 is connected to the equaliser 8 for the transmission of access contention data appertaining to the number of packets of information to be transmitted. Receive signals are fed via the switch 11 to a demodulator12 which feeds the detector 13. The detector 13 either feeds a data reception chain 14 via a switch 15 or an acknowledgement burst error control decoder unit 16 and a slot transmission timer17 which serve to identify available slots during which data packets in the queuing buffer 1 should be transmitted.

The base station comprises a transmit/receive aerial 18 fed for transmission purposes from a modulator19. Signals received at the aerial 18 are fed via a detector 21 and demodulator 22 to a data reception chain 23 via a switch 24. The switch 24 is arranged to feed the data reception chain 23 for data reception purposes or an access burst error correction and detection unit 25 when access-contention request data is received. The access burst error correction and detection unit 25 feeds a packet reservation multiple access control algorithm unit 26 which analyses each access contention request and serves to provide data appertaining to available time slots, which data is fed via an acknowledgement burst former 27 to an address unit 28 which serves to add the mobile's address to the data and an error correction and detection decoder 29 for the acknowledgement burst. The modulator 19 is fed conventionally with data during appropriate transmission slots and from the error correction and detection decoder 29 for the transmission of acknowledgement signals and data appertaining to slots in which a mobile should transmit. In order to highlight novel features of the arrangement just before described with reference to figure 5 those units which are novel and additional to a known system are shown in the shaded regions 30 and 31 for the mobile station transmitter/receiver and the base station transmitter/receiver respectively. Various modifications may be made to the arrangement shown without departing from the scope of the invention and for example the equalizer 8 and or the interleaver buffer 7 may be omitted.

## Claims

1. A method of operating a cellular mobile radio system comprising a base station and a plurality of mobile terminals in accordance with a packet reservation multiple access protocol, data being transmitted between the base station and the mobile terminals in transmission links comprising a plurality of frames, the method comprising the steps of:-
a) designating a plurality of time slots for each frame for the transmission of data between the mobile terminals and the base station;
b) transmitting access contention data from a mobile terminal to the base station; and
c) transmitting data from the mobile terminal to the base station in the time slots;
characterised in that step b) comprises accumulating data for transmission, determining the number of time slots required per frame for transmitting the accumulated data between the mobile terminal and the base station as the data is being accumulated, and incorporating that number of time slots in the access contention data, the access contention data being transmitted in a designated time slot;
and in that the method further comprises, prior to step c), the step of allocating time slots to the mobile terminal in accordance with availability, the time slots in a frame being allocated in accordance with the number of time slots included in the access contention data.

2. A method according to claim 1, further comprising setting up and dynamically positioning single and double time slots in accordance with traffic load requirements.

3. A method according to claim 1 or 2, further comprising, upon receiving access contention data in the designated time slot, transmitting to the mobile terminal timing information derived from the time of arrival of the access contention data within the designated time slot.

4. A method according to claim 3, further comprising utilising the timing information received by the mobile terminal to adjust the timing of transmission of data in time slots allocated by the base station.

5. A method according to any one of the preceding claims, wherein each time slot designated for the transmission of access contention data is greater than the duration of the access contention data by an amount which is substantially determined by a predetermined maximum propagation delay.

6. A method according to any one of the preceding claims, further comprising the step of allocating two contiguous time slots to a mobile terminal in accordance with the character of the data to be transmitted, the mobile terminal being adapted and arranged to transmit data of twice the duration of a single time slot.

7. A method according to claim 6, wherein the data is transmitted in the two contiguous time slots with the same non-information bearing overheads as that transmitted for a single time slot.

8. A method according to any one of the preceding claims, further comprising the steps of batching asynchronous transfer (ATM) cells for transmission of data, detecting errors in the batched cells, and automatically repeating requests in respect of cells of a batch which have errors.

9. A cellular mobile radio system comprising a base station (18, 19, 20, 21, 22, 23, 31) and a plurality of mobile terminals (6, 7, 8, 9, 10, 11, 12, 13, 14, 30) in which data is transmitted between the base station (18, 19, 20, 21, 22, 23, 31) and the mobile terminals (6, 7, 8, 9, 10, 11, 12, 13, 14, 30) in transmission links comprising a plurality of frames, the system comprising:-
means for designating a plurality of time slots for each frame;
means for transmitting access contention data; and
means for transmitting data in the time slots;
characterised in that the system further comprises means (1) for accumulating data for transmission, means (2) for determining the number of time slots required per frame as the data is being accumulated, and means (3) for including the number of time slots in the access contention data; and means (26, 27, 28) for allocating a plurality of time slots in a frame in accordance with the accumulated data.

## Patentansprüche

1. Verfahren zum Betreiben eines Zellenmobilfunksystems mit einer Basisstation und mehreren mobilen Endgeräten gemäß einem Paketreservierungs-Mehrfachzugriff-Protokll, wobei Daten zwischen der Basisstation und den mobilen Endgeräten in Übertragungsstrecken, die mehrere Rahmen umfassen, übertragen werden, wobei das Verfahren die folgenden Schritte umfaßt:
a) Bezeichnen mehrerer Zeitschlitze für jeden Rahmen für die Übertragung von Daten zwischen den mobilen Endgeräten und der Basisstation;
b) Übertragen von Zugriffskonfliktdaten von einem mobilen Endgerät an die Basisstation; und
c) Übertragen von Daten vom mobilen Endgerät an die Basisstation in den Zeitschlitzen;
dadurch gekennzeichnet, daß der Schritt b) das Akkumulieren von Daten für die Übertragung, das Bestimmen der Anzahl von Zeitschlitzen, die pro Rahmen für die Übertragung der akkumulierten Daten zwischen dem mobilen Endgerät und der Basisstation erforderlich sind, wenn die Daten akkumuliert werden, und das Einbauen dieser Anzahl von Zeitschlitzen in die Zugriffskonfliktdaten umfaßt, wobei die Zugriffskonfliktdaten in einem bezeichneten Zeitschlitz übertragen werden;
und daß das Verfahren ferner vor dem Schritt c) den Schritt des Zuweisens von Zeitschlitzen an das mobile Endgerät in Übereinstimmung mit ihrer Verfügbarkeit umfaßt, wobei die Zeitschlitze in einem Rahmen in Übereinstimmung mit der Anzahl von in den Zugriffskonfliktdaten enthaltenen Zeitschlitzen zugewiesen werden.

2. Verfahren nach Anspruch 1, ferner mit dem Einrichten und dynamischen Positionieren von einzelnen und doppelten Zeitschlitzen in Übereinstimmung mit Verkehrsbelastungsanforderungen.

3. Verfahren nach Anspruch 1 oder 2, ferner mit dem Empfang von Zugriffskonfliktdaten in dem bezeichneten Zeitschlitz und dem Übertragen von Zeitinformationen, die aus der Ankunftszeit der Zugriffskonfliktdaten innerhalb des bezeichneten Zeitschlitzes abgeleitet werden, an das mobile Endgerät bei Empfang von Zugriffskonfliktdaten in dem bezeichneten Zeitschlitz.

4. Verfahren nach Anspruch 3, ferner mit dem Verwenden der Zeitinformationen, die vom mobilen Endgerät empfangen werden, um den Zeitverlauf der Übertragung von Daten in durch die Basisstation zugewiesenen Zeitschlitzen einzustellen.

5. Verfahren nach einem der vorhergehenden Ansprüche, bei dem jeder für die Übertragung von Zugriffskonfliktdaten bezeichnete Zeitschlitz um einen Betrag, der im wesentlichen durch eine vorgegebene maximale Ausbreitungsverzögerung bestimmt ist, größer als die Dauer der Zugriffskonfliktdaten ist.

6. Verfahren nach einem der vorhergehenden Ansprüche, ferner mit dem Schritt des Zuweisens zweier benachbarter Zeitschlitze an ein mobiles Endgerät entsprechend der Eigenschaft der zu übertragenden Daten, wobei das mobile Endgerät so beschaffen und angeordnet ist, daß es Daten mit der doppelten Dauer eines einzigen Zeitschlitzes überträgt.

7. Verfahren nach Anspruch 6, bei dem die Daten in zwei benachbarten Zeitschlitzen mit demselben keine Informationen tragenden Overhead wie jener, der für einen einzigen Zeitschlitz übertragen wird, übertragen werden.

8. Verfahren nach einem der vorhergehenden Ansprüche, ferner mit den Schritten des stapelweisen Verarbeitens asynchroner Übertragungszellen (ATM-Zellen) für die Übertragung von Daten, des Erfassens von Fehlern in den stapelweise verarbeiteten Zellen und des automatischen Wiederholens von Anforderungen in bezug auf Zellen eines Stapels, die Fehler aufweisen.

9. Zellenmobilfunksystem, das eine Basisstation (18, 19, 20, 21, 22, 23, 31) und mehrere mobile Endgeräte (6, 7, 8, 9, 10, 11, 12, 13, 14, 30) enthält, in dem Daten zwischen der Basisstation (18, 19, 20, 21, 22, 23, 31) und den mobilen Endgeräten (6, 7, 8, 9, 10, 11, 12, 13, 14, 30) in Übertragungsstrecken, die mehrere Rahmen enthalten, übertragen werden, wobei das System umfaßt:
eine Einrichtung zum Bezeichnen mehrerer Zeitschlitze für jeden Rahmen;
eine Einrichtung zum Übertragen von Zugriffskonfliktdaten; und
eine Einrichtung zum übertragen von Daten in den Zeitschlitzen;
dadurch gekennzeichnet, daß das System ferner eine Einrichtung (1) zum Akkumulieren von Daten für die Übertragung, eine Einrichtung (2) zum Bestimmen der Anzahl der pro Rahmen erforderlichen Zeitschlitze, wenn die Daten akkumuliert werden, sowie eine Einrichtung (3) zum Einbauen der Anzahl von Zeitschlitzen in die Zugriffskonfliktdaten; und eine Einrichtung (26, 27, 28) zum Zuweisen mehrerer Zeitschlitze in einem Rahmen in Übereinstimmung mit den akkumulierten Daten umfaßt.

## Revendications

1. Procédé pour faire fonctionner conformément à un protocole d'accès multiple par réservation de paquets un système de radiocommunications mobile cellulaire comportant une station de base et une pluralité de terminaux mobiles, des données étant transmises entre la station de base et les terminaux mobiles dans des liaisons de transmission comportant une pluralité de trames, le procédé comportant les étapes consistant à :
a) désigner une pluralité de créneaux temporels pour chaque trame pour la transmission de données entre les terminaux mobiles et la station de base,
b) transmettre des données de conflit d'accès à partir d'un terminal mobile vers la station de base, et
c) transmettre des données à partir du terminal mobile vers la station de base dans les créneaux temporels,
caractérisé en ce que l'étape b) comporte l'accumulation de données de transmission, la détermination du nombre de créneaux temporels nécessaires par trame pour transmettre les données accumulées entre le terminal mobile et la station de base une fois que les données sont accumulées, et l'incorporation de ce nombre de créneaux temporels dans les données de conflit d'accès, les données de conflit d'accès étant transmises dans un créneau temporel désigné,
et en ce que le procédé comporte en outre, avant l'étape c), l'étape consistant à allouer des créneaux temporels au terminal mobile en fonction de leur disponibilité, les créneaux temporels d'une trame étant alloués conformément au nombre de créneaux temporels inclus dans les données de conflit d'accès.

2. Procédé selon la revendication 1, comportant en outre l'initialisation et, d'une manière dynamique, le positionnement de créneaux temporels uniques et doubles selon les exigences de charge du trafic.

3. Procédé selon la revendication 1 ou 2, comportant en outre, lors de la réception de données de conflit d'accès dans le créneau temporel désigné, la transmission vers le terminal mobile d'informations de cadencement dérivées de l'instant d'arrivée des données de conflit d'accès au sein du créneau temporel désigné.

4. Procédé selon la revendication 3, comportant en outre l'utilisation des informations de cadencement reçues par le terminal mobile afin d'ajuster le cadencement de la transmission de données dans les créneaux temporels alloués par la station de base.

5. Procédé selon l'une quelconque des revendications précédentes, dans lequel chaque créneau temporel désigné pour la transmission de données de conflit d'accès est plus grand que la durée des données de conflit d'accès d'une quantité déterminée essentiellement par un retard de propagation maximal prédétermine.

6. Procédé selon l'une quelconque des revendications précédentes, comportant en outre l'étape consistant à allouer deux créneaux temporels contigus à un terminal mobile en fonction du caractère des données à transmettre, le terminal mobile étant adapté et agencé pour transmettre des données ayant une durée deux fois supérieure à celle d'un créneau temporel unique.

7. Procédé selon la revendication 6, dans lequel les données sont transmises dans les deux créneaux temporels contigus ayant les mêmes bits auxiliaires ne portant pas d'informations que ceux transmis dans un créneau temporel unique.

8. Procédé selon l'une quelconque des revendications précédentes, comportant en outre les étapes consistant à grouper en lots des cellules de transfert asynchrone (ATM) pour la transmission de données, détecter les erreurs dans les cellules en lots, et répéter d'une manière automatique des demandes concernant des cellules d'un lot comportant des erreurs.

9. Système de radiocommunications mobile cellulaire comportant une station de base (18, 19, 20, 21, 22, 23, 31) et une pluralité de terminaux mobiles (6, 7, 8, 9, 10, 11, 12, 13, 14, 30) dans lequel des données sont transmises entre la station de base (18, 19, 20, 21, 22, 23, 31) et les terminaux mobiles (6, 7, 8, 9, 10, 11, 12, 13, 14, 30) dans des liaisons de transmission comportant une pluralité de trames, le système comportant :
des moyens pour désigner une pluralité de créneaux temporels pour chaque trame,
des moyens pour transmettre des données de conflit d'accès, et
des moyens pour transmettre des données dans les créneaux temporels,
caractérisé en ce que le système comporte de plus des moyens (1) pour accumuler les données de transmission, des moyens (2) pour déterminer le nombre de créneaux temporels exigés par trame une fois que les données sont accumulées, et des moyens (3) pour inclure le nombre de créneaux temporels dans les données de conflit d'accès ; et des moyens (26, 27, 28) pour allouer une pluralité de créneaux temporels dans une trame conformément aux données accumulées.
